# EUROPEAN PATENT APPLICATION

(11) **EP 0 659 378 A1**
(43) Date of publication of application: **28.06.1995**
(21) Application number: 94203706.0
(22) Date of filing: 20.12.1994
(51) Int. Cl.: A47J 31/40

(54) **A machine for preparing hot drinks by infusion**

(30) Priority: 23.12.1993 IT MI932720
(71) Applicant: POLTI S.p.A., I-22070 Bulgarograsso (Como) (IT)
(72) Inventor: Polti, Franco, I-22077 Olgiate Comasco, Como (IT)
(74) Representative: Perani, Aurelio

(57) **Abstract**

A machine for preparing hot drinks by infusion (1), having enhanced compact design features, comprises an infusion chamber (12) adapted to contain an infusion substance (C), and a means for moving (50) it between an infusion and hot drink-dispensing position and an infusion substance (C) fill and discharge position, whereby the filling with the infusion substance (C) and cleaning take place externally of the machine (1).

## Description

This invention relates to a machine for preparing hot drinks by infusion, comprising an infusion chamber adapted to contain an infusion substance.

In particular, it relates to a machine, mainly intended for household use, for making "espresso" or "Italian" style coffee drinks from ground toasted coffee grains.

The grindings may be supplied either in the form of a tablet or a wafer or in a porous paper bag, for example, to be introduced manually into the infusion chamber.

After the ground coffee has been placed into the infusion chamber, it is pressed, either manually or with the aid of a special plug, to form a so-called pressed tablet.

This is followed by the infusion process, which is initiated by injecting hot water under a pressure into the infusion chamber. The water, presently turned into a coffee drink, is then extracted through a filter and poured into a cup or thermal container. The amount of the water and its temperature are pre-set to enhance the organoleptic quality of the drink.

A growing trend in current design is toward a more extensive recourse to automation in order to make machines of this kind ever easier to use.

However, a full automation of the preparation process encounters significant problems yet to be solved.

For instance, the manual introduction of pre-formed tablets or grindings is inconvenient, and involves contact of the infusion chamber inside the machine framework with harsh surroundings.

Also to be held in mind is the difficulty experienced to clean the infusion chamber, placed in the same harsh surroundings, especially on such occurrences as an incidental spillage of grindings or crushing of a pre-formed tablet. The inconvenience of this operation is also due to that machines of this kind are to feature compact size in view of their domestic destination, which tends to crowds the space available for the operation.

Another problematic aspect is the need to discharge a spent pressed tablet and collect it into a specially provided container without fouling, as may result from a crushed pressed tablet, hard-to-reach areas. This discharge operation additionally involves the provision of a means of ejecting the spent pressed tablet from the bottom of the infusion chamber and discharging it directly into its collector. Such means is also a dedicated one unsuited to co-operation with other mechanisms of the machine, which contributes to the consequences already mentioned above.

The underlying technical problem of this invention is to provide a machine for preparing hot drinks by infusion, which can overcome the drawbacks besetting the prior art and fill the aforesaid demands.

This problem is solved by a machine as indicated being characterized in that it comprises a means for moving said infusion chamber between an infusion and hot drink-dispensing position and one or more infusion substance fill/discharge positions. The features and advantages of a machine for preparing hot drinks by infusion according to the invention will be more clearly apparent from the description of a preferred embodiment thereof, given by way of example only, and from the accompanying drawings, in which:

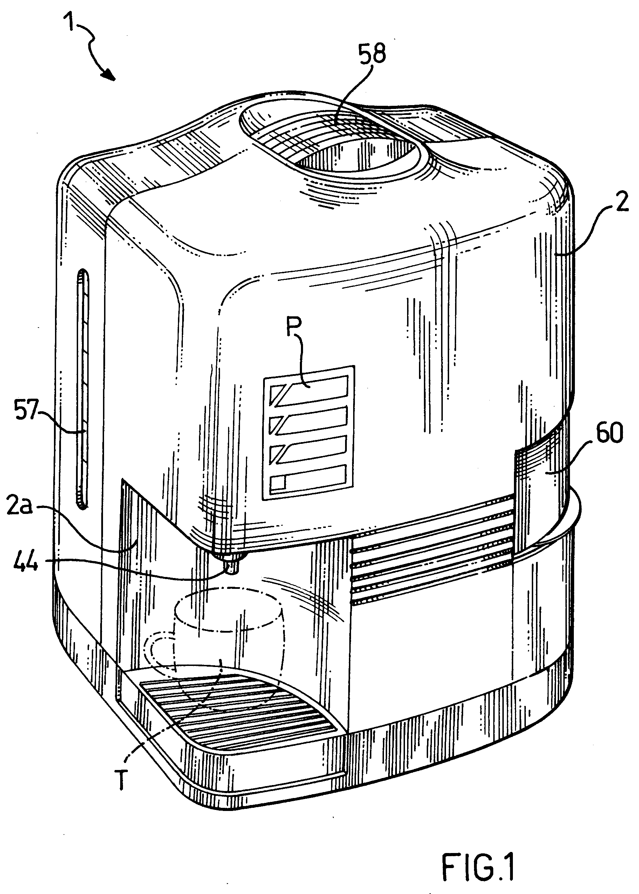

Figure 1 is a perspective view of a machine for preparing hot drinks by infusion according to the invention;

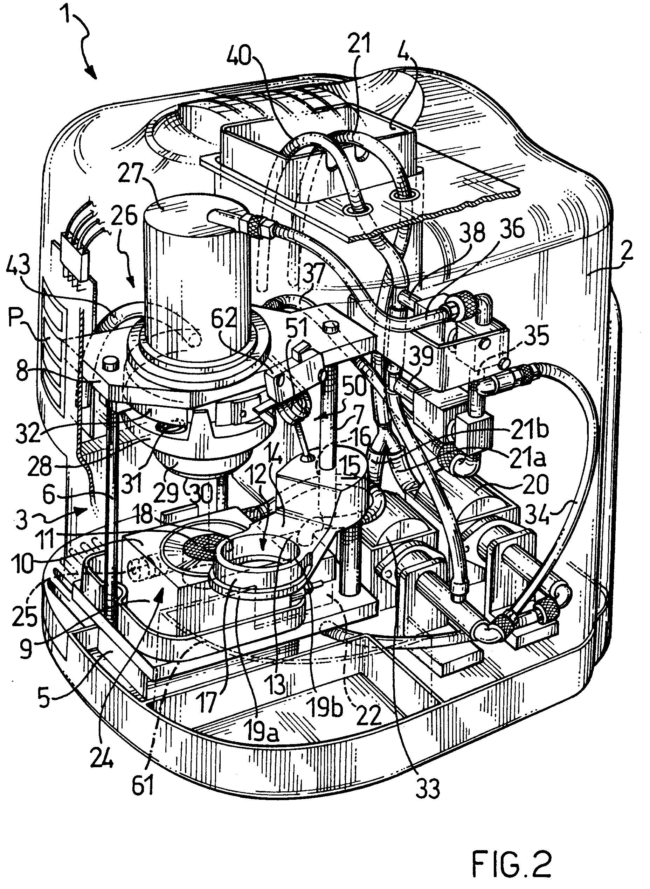

Figure 2 is a partly cutaway perspective view of the machine shown in Figure 1;
Figures 3 and 4 are a side view and a plan view, respectively, showing in section a detail of the machine in Figure 1, with the infusion chamber in the fill position;
Figures 5 and 6 are similar views of the detail shown in Figures 3 and 4, but with the infusion chamber in the infusion and dispensing position;
Figure 7 is a perspective view of a detail of the machine in Figure 1 incorporating an accessory therefor;
Figure 8 is a partly cutaway view showing the accessory in Figure 7 in exploded perspective;
Figure 9 is a perspective view of a detail of the accessory in Figure 7; and
Figure 10 is a part-sectional elevation view of a detail of the machine in Figure 1 incorporating the accessory of Figure 7.

In the drawing figures, a machine for preparing hot drinks by infusion, according to the invention, is generally denoted by 1. It comprises a rigid enclosure 2 containing a structural framework 3 and a water tank 4.

The tank 4 may be made of a clear material, and visible from outside the enclosure 2 through a vertically elongated window 57 placed level with the tank 4. In this way, a user is allowed to check visually the water level inside the tank 4, and top it up, where required, after removing a filler cap 58 located at the enclosure 2 top.

The structural framework 3 has a parallelepipedic shape and includes a base 5, two, respectively front 6 and rear 7, uprights secured symmetrically on opposite sides of the base 5, and a bearing platform 8 carried on said uprights 6, 7.

Located on the base 5 is a heater block 9 approximately cubic in shape, which has a top face 10 provided centrally with a perforated dish 11 of circular shape which functions as a percolator.

The machine 1 includes an infusion chamber 12 adapted to contain an infusion substance C and formed in one end 13 of a rigid arm 14.

Said rigid arm 14 extends in a horizontal plane perpendicular to said rear upright 7, on which it fits pivotally by having, on its remote end 15 from the infusion chamber 12, a bore 16 through which said upright 7 is passed.

The infusion chamber 12 is defined by a ring-like structure 17 formed integrally with said end 13 of said rigid arm, laid horizontally, and including a circular vertical wall 18 which defines a bottom edge 19a and a top edge 19b.

When turned around the rear upright 7, the arm 14 will move said infusion chamber between an infusion and hot drink-dispensing position and an infusion substance C filling and discharging position.

In said infusion and dispensing position, the infusion chamber 12 is aligned to the perforated dish 11 of the heater block 10, with the bottom edge 19a in contact with the top face 10 of said block 9.

The perforated dish 11 and the tank 4, which would normally be filled with water for making the infusion, are in liquid communication. This communication is established, starting from the tank 4, by a first electric pump 20 which dips on its interior with a first hose 21 and a branch-off 21a thereof, a cutoff solenoid valve 22 located on the delivery side of the first pump 20, a second hose 23 extending between the cutoff solenoid valve 22 and the heater block 9, and an electric resistance heater 24, which has a spiral path 25 and is placed inside the heater block 9, which opens downwardly of said perforated dish 11.

The bearing platform 8 of the framework 3 carries a pressing assembly 26 having a hydraulic actuator 27 of the double-acting piston type for driving a presser 28 along the vertical.

The presser 28 comprises a plug 29 carried through springs 31 on a plate 32 directly connected to the hydraulic actuator 27.

The plug 29 is provided in the machine 1 for preparing hot drinks by infusion, for the purpose of compressing the infusion substance C contained in the infusion chamber 12, and has a bottom 30 acting on the infusion chamber 12 in an infusion and dispensing position, as explained in connection with the operation of the machine 1.

The bottom 30 of the plug 29 locates upwardly of the perforated dish 11 of the heater block 9, in an exactly centred position.

The diameter of the plug 29 is substantially the same as the infusion chamber 12; in addition, a ring seal 42 surrounding the plug 29 hydraulically seals off the infusion chamber 12 from the pad 29.

The bottom 30 of the plug 29 is perforated and functions as a percolator in hydraulic communication with a dispensing pipe 43 which extends from the dish 32 and is connected to a spout dispenser 44 of the drink obtained by infusion.

The spout dispenser 44 locates on the enclosure 2 outside, laterally of the framework 3 and above a compartment 2a of the enclosure 2 where a cup T can be placed for filling with the drink.

The hydraulic actuator 27 is in direct liquid communication with the water tank 4.

This communication is provided, starting from said tank 4, by said first hose 21 and a branch-off 21b thereof which dips into the water in the tank 4 and is connected to a second electric pump 33 having its delivery side connected by a third hose 34 to a three-way solenoid valve 35 whence there extend fourth and fifth hoses 36, 37 connected to said hydraulic actuator 27.

The three-way solenoid valve 35 also has a pair of discharge outlets 38, 39 connected to a discharge pipe 40 ending into the tank 4.

The machine 1 for dispensing a hot drink includes a means 50 for moving said infusion chamber 12 between said infusion and hot drink-dispensing position and said one or more infusion substance C fill/discharge positions.

Said means 50 comprises a sprung lever 51 and said rigid arm 14, said sprung lever 51 being secured between the end 15 of the rigid arm 14 and the plate 32 of the presser assembly 26.

This sprung lever 51 is arranged to pivot the rigid arm 14, as the plate 32 and plug 29 are moved vertically.

The infusion and hot drink-dispensing position is attained when the perforated dish 11, infusion chamber 12, and bottom 30 of the plug 29 all lie in the same vertical line and the presser 28 is lowered to compress the infusion substance C and provide the hydraulic seal among the various components.

The fill position is attained with the presser 28 fully raised so that the infusion chamber 12 is shifted sideways relative to the framework 3, on the remote side from the compartment 2a.

In that position, the introduction of infusion substance C is allowed by the provision of a gate 60 on the enclosure 2. In this preferred embodiment of the machine 1 for preparing hot drinks, the fill position and discharge position for the infusion substance C, in the pressed tablet form, coincide, as will become apparent from the description of the machine 1 operation.

Downwardly of the fill and discharge position, the machine 1 has a container 61 for collecting the spent infusion substance C, advantageously made removable for periodic cleaning.

The infusion chamber 12 defined by said ring structure 17 is adapted to receive the infusion substance C in the pressed tablet form, as packaged in a wrapper made of porous paper or another material.

Said tablet advantageously has a diameter equal or greater than that of the ring structure 17, and in any case such that the tablet can be pushed forcibly into the infusion chamber 12.

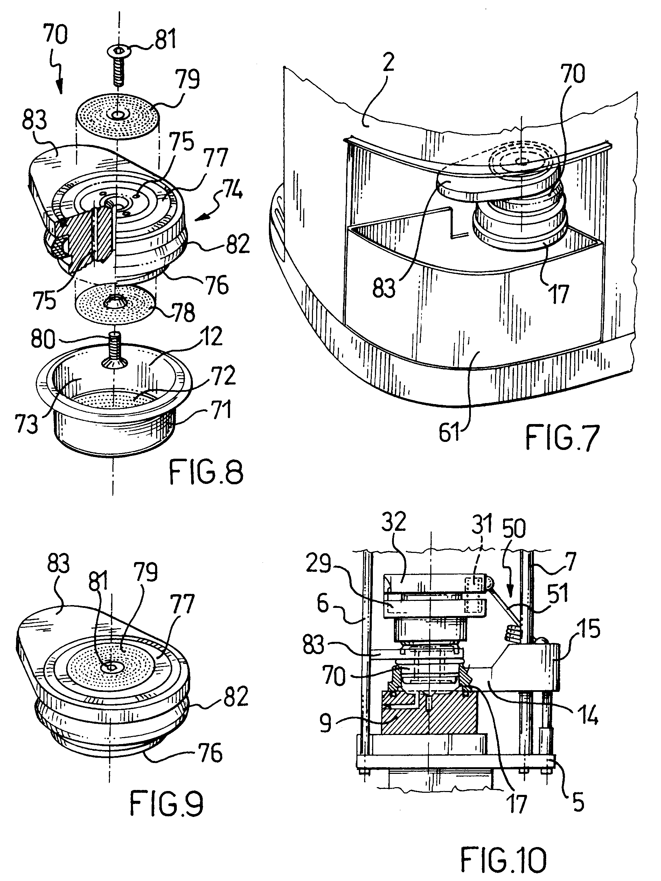

In order to accept infusion substance C in loose form as well, as is usual with household coffee makers, the machine 1 for preparing hot drinks includes a loading accessory 70 shown in Figures 7 to 10.

This loading accessory 70 comprises a circular shape bowl 71 defining an infusion chamber 12 on its interior and having a flat perforated bottom 72 and a top opening 73.

The accessory 70 further comprises a closure element 74, also circular in shape, adapted to be fitted forcibly into the top opening 73.

The closure element 74 has a plurality of through-going passages 75 for liquid communication between the infusion chamber 12 and the outside which are disposed between opposite bottom 76 and top 77 surfaces of the closure element 74 and carry further bottom 78 and top 79 perforated dishes, respectively fastened by means of screws 80,81.

To provide the hydraulic tightness required, the closure element also has a ring seal 82.

The bowl 71 of the loading accessory 70 is intended for containing the infusion substance C, and has a diameter dimension such that it can be fitted into the ring structure 17 that holds it once it has been filled with infusion substance C.

The machine 1 for preparing hot drinks further comprises a command and control arrangement, being a conventional design not fully illustrated in the drawings, for allowing a user to control the preparation of the hot drink.

This control arrangement controls the solenoid valves 22, 35 to open as well as the operation of the electric pumps 20, 33 and the electric heater 24.

In this respect, the machine 1 comprises a face-mounted button strip P, a travel limit switch 62 located upwardly of the presser 28, and an emptying sensor, not shown, located on the bottom of the tank 4.

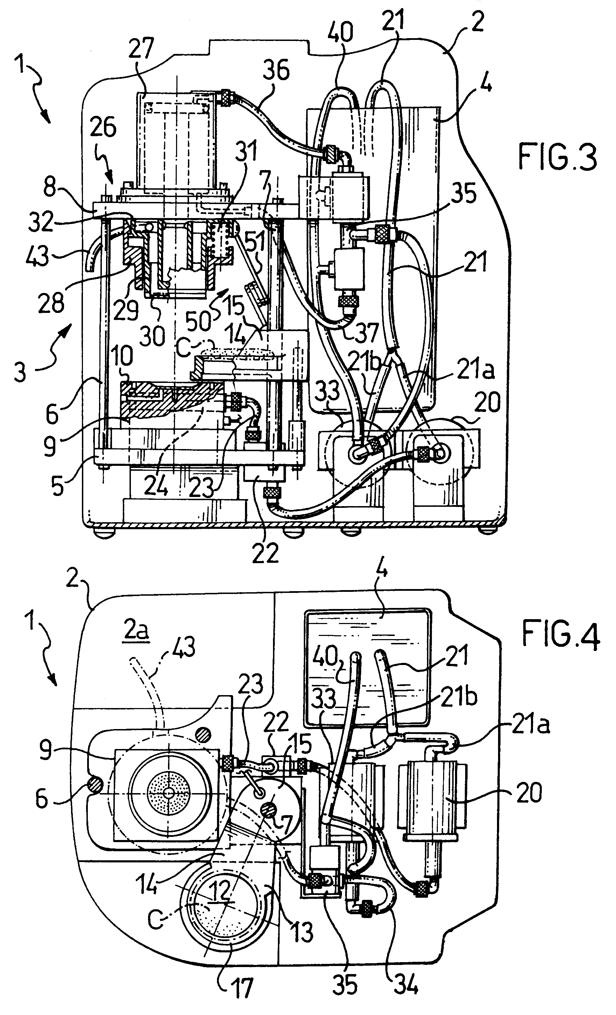

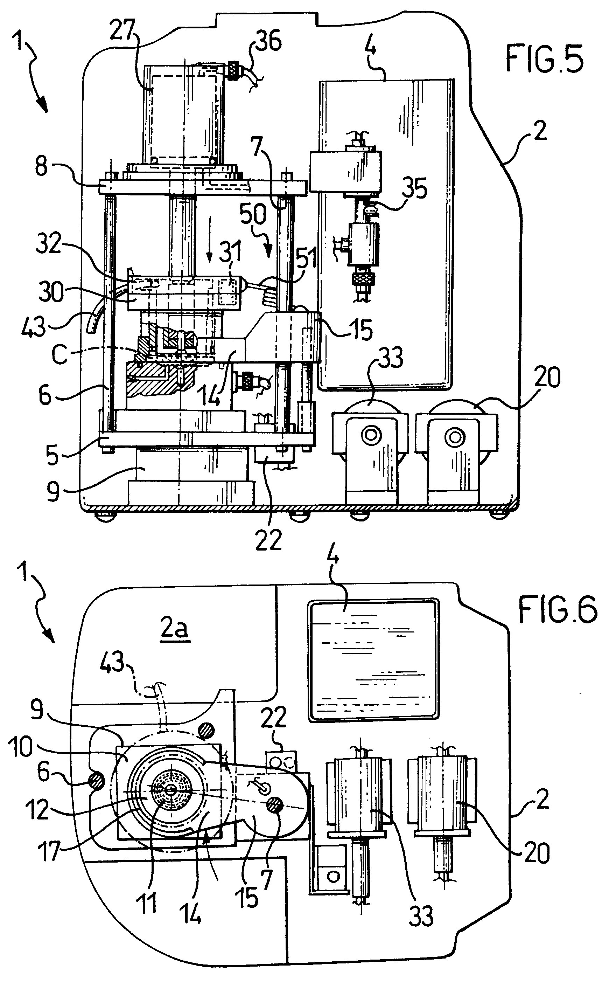

With reference to Figures 3 to 6, the operation of the machine 1 for preparing hot drinks according to the invention will now be described.

In Figures 3 and 4, the machine 1 is depicted in the fill position.

The ring structure 17 can be reached through the gate 60 to put the infusion substance C into the infusion chamber 12 in the form of a tablet, or by means of the loading accessory 70.

After the infusion substance C has been placed into the infusion chamber 12, the operational cycle of the machine 1 is started from the button strip P.

The second electric pump 33 draws water from the tank 4 and pumps it to the hydraulic actuator 27 of the presser assembly 26 through the three-way solenoid valve 35, suitably set.

The water flows through the fourth hose 36 while the water previously contained in the hydraulic actuator 27 is discharged into the tank through the fifth hose 37, the discharge outlet 39 and the discharge pipe 40.

This causes the presser 28 to move down toward the heater block 9, and the means 50 for moving the infusion chamber 12 to be operated.

In fact, the sprung lever 51 is compressed between the presser 28 and the end 15 of the rigid arm 14, causing the rigid arm 14 to pivot and the infusion chamber 12 to be shifted accordingly from the fill position to the infusion and dispensing position.

This movement takes place in a circular path because it is caused by the rotary motion of the arm 14 pivoted around the rear upright 7 of the structural framework 3.

The presser 28 continues to move down until the plug 29 acts compressively on the infusion substance C in the infusion chamber 12.

This compression is made gradual by the presence of the springs 31 between the pad 29 and the plate 32 supporting it.

When the loading accessory 70 is used with the bowl 71 filled with the infusion substance C, the latter is compressed because it has been inserted between the flat bottom 72 of the bowl 71 and the bottom perforated dish 78 of the closure element 74 which is force fitted through the opening 73 of the bowl 71.

With the springs 31 fully compressed, the control arrangement de-actuates the second electric pump 33 and actuates the first electric pump 20 which draws water from the tank 4 and directs it, through the cutoff solenoid valve 22, into the electric heater where the water is heated to the appropriate temperature for infusion.

Thereafter, the water flows through the perforated dish 11, the infusion substance C, the bottom 30 of the plug 29, the hose 43, and the spout dispenser 44.

In flowing through the infusion substance C, the water is converted into a hot drink which then runs down into the cup T placed in the compartment 2a of the machine 1.

Where the loading accessory 70 is used, the water flows further through the flat bottom 72 of the bowl 71, the perforated dishes 78, 79 and the through-going passages 75.

Once a desired amount of the drink has been dispensed, the user can discontinue the dispensation by acting on the button strip P.

At this time, the first electric pump 20 is turned off and the second electric pump 33 is turned on to draw water from the tank 4 and convey it to the hydraulic actuator 27 through the three-way solenoid valve 35, and to the fifth hose 37. At the same time, the water previously contained in the hydraulic actuator 27 is discharged to the tank 4 through the fourth hose 36, the discharge outlet 38, and the discharge pipe 40.

In this way, the presser 28 is pushed up to operate the means 50 for moving the infusion chamber 12, which is caused to move in a circular path to the discharge position, coinciding with the fill position.

In the discharge position, the tablet containing the spent infusion substance C is in a shrunk state and falls down, also on account of the shaking movement, into the collector 61.

In the event that the loading accessory 70 is used, this can easily be grasped through the open gate 60.

Upon the presser 28 tripping the travel limit switch 62, the second electric pump 33 is de-actuated, and the machine 1 is ready for a fresh operational cycle.

It can be seen that the hot water is flowed through the infusion substance C in an upward rather than a downward direction, which enhances the organoleptic qualities of the drink.

Advantageously, the hydraulic actuator 27 uses as a working fluid the same water from the tank 4 as is used for making the hot drink by infusion.

This expedient avoids the need to provide other, health-affecting fluids, and allows accordingly a more compact design for the machine 1.

In this respect, the hydraulic actuator 27 is fabricated from plastics materials which are suitable for use with food products in general.

In a preferred embodiment of the machine 1 for preparing hot drinks by infusion according to the invention, the cutoff valve 22 is a three-way type, so that any liquid left upstream of the solenoid valve 22 can be drained into a specially provided vessel, not shown, to empty the heater block 9. This expedient improves the quality of the drink prepared next.

The use of the ring structure 17 is convenient in that it reduces the likelihood of the pressed tablet being crushed.

In the fill and discharge position, the infusion chamber 12 can be readily reached by the user for introducing infusion substance C as well as cleaning the interior of the machine 1.

These advantages are obtained with a machine 1 for preparing hot drinks by infusion according to the invention which exhibits enhanced compact design features, is constructionally simple, and suits production of an industrial type without involving the use of highly expensive elements or materials.

This machine 1 is specially effective to make espresso coffee drinks for a consumer panel of medium size, and the same inventive concept could be applied to the preparation of other hot drinks, such as tea, milk, cocoa drinks, aromatic tisane, etc.

The machine 1 for preparing hot drinks by infusion may be altered and modified in several ways within the scope of the inventive concept.

As an example, a boiler could be provided externally of the infusion block to generate steam under pressure for delivery through a special nozzle located on the machine 1 enclosure 2 outside. The steam could be used, for instance, for heating milk or water to make "cappuccino" or tea drinks. The boiler can be fed from the electric feed pump 20 for the heater block 9, it being sufficient that an additional three-way valve be provided under control from an automatic or manually operated control system.

The use of the movable infusion chamber between different operational positions is not limited to machines of the household type, and similar advantages to those already described can be secured by employing the movable infusion chamber with hot-drink dispensing machines of an industrial type and suitably altering the movement and infusion controlling arrangement.

## Claims

1. A machine for preparing hot drinks by infusion (1), comprising an infusion chamber (16) adapted to contain an infusion substance (C), characterized in that it comprises a means for moving (50) said infusion chamber (12) between an infusion and hot drink-dispensing position and one or more infusion substance (C) fill/discharge positions.

2. A machine (1) according to Claim 1, wherein a plug (29) is provided for compressing the infusion substance (C) contained in the infusion chamber (12) which has a bottom (30) acting on the infusion chamber (12) in the infusion and dispensing position.

3. A machine (1) according to Claim 1, wherein said fill and discharge positions of the infusion chamber (12) coincide.

4. A machine (1) according to Claim 1, wherein the infusion chamber (12) is moved between the infusion and hot drink-dispensing position and the infusion substance (C) fill and discharge position along a circular path.

5. A machine (1) according to Claim 1, including a water tank (4), an electric pump which dips into the tank (4) through a first hose (21), a cutoff solenoid valve (22) placed on the delivery side of the electric pump (20), a second hose (23) extending between the cutoff solenoid valve (22) and an electric heater (24), which follows a spiral path (25) and is open downwardly to a perforated dish (11) whereat the infusion chamber (12) locates in the infusion and dispensing position.

6. A machine (1) according to Claim 2, wherein said plug (29) is carried through springs (31) on a plate (32) connected to a hydraulic actuator (27) for moving the pad (29) vertically.

7. A machine (1) according to Claim 1, wherein said infusion chamber (12) is defined by a ring structure (17) formed integrally on one end (13) of a rigid arm (14) engaged pivotally with an upright (7) perpendicular thereto, it having on an opposite end (15) a bore (16) through which said upright (7) is passed.

8. A machine (1) according to the preceding claims, wherein said means (50) of movement comprises said rigid arm (14) and a sprung lever (51) secured between said end (15) with the bore (16) of said rigid arm (14) and said plate (32), said sprung lever (51) being disposed to produce rotation of the rigid arm (14) as the plate (32) is moved.
